# NEUE EUROPÄISCHE PATENTSCHRIFT

(11) **EP 2 078 647 B2**
(45) Veröffentlichungstag und Bekanntmachung des Hinweises auf die Entscheidung über den Einspruch: **12.08.2015**
(45) Hinweis auf die Patenterteilung: 05.10.2011
(21) Anmeldenummer: 08021496.8
(22) Anmeldetag: 11.12.2008
(51) Int. Cl.: B60S 1/48, B60S 1/52

(54) **Waschanlage für Scheiben und/oder Scheinwerfer eines Fahrzeuges**
Washing assembly for screens and/or headlamps of a vehicle
Installation de lavage pour vitres et/ou phares d'un véhicule

(30) Priorität: 10.01.2008 DE 102008003881
(43) Veröffentlichungstag der Anmeldung: 15.07.2009
(73) Patentinhaber: Vola Plast GmbH & Co. KG, 34286 Spangenberg (DE)
(72) Erfinder: Hofmann, Jürgen, 34212 Melsungen (DE); Bickel, Markus, 34326 Morschen (DE); Seyfarth, Lutz, 37287 Wehretal (DE)
(74) Vertreter: Walther, Walther & Hinz GbR

(56) Entgegenhaltungen:
- EP-A1- 0 667 267
- DE-A1- 3 709 308
- DE-A1- 4 303 113
- DE-A1- 10 314 422
- DE-A1- 19 913 193
- DE-A1-102004 022 998
- US-A1- 2006 108 447

## Beschreibung

Die vorliegende Erfindung betrifft eine Waschanlage gemäß dem Oberbegriff des Anspruches 1 gemäß DE 199 13 193 A1.

Bei Waschanlagen für Scheiben und/oder Scheinwerfer eines Fahrzeuges ergibt sich im Winter die Schwierigkeit, dass das darin enthaltene Fluid einfrieren kann oder aber, dass sich an der Düse Oberflächenfeuchtigkeit sammelt und friert. In beiden Fällen kann kein weiteres Fluid aus der Düse austreten, so dass die gesamte Waschanlage unbrauchbar wird. Zur Lösung des Problems wird in der DE 10 2007 007 761 A1 ein Koaxialkabel vorgeschlagen, welches in der Fluidleitung verlegt wird, um diese eisfrei zu halten. In der EP 0 667 267 A1 wird vorgeschlagen, den Heizleiter durch die Düse zu führen, um die Düse, und somit das darin befindliche Fluid, zu erwärmen und eisfrei zu halten. Berücksichtigt man, dass in einer Düse sehr viel mehr Fluid vorhanden ist als in der Fluidleitung, so wird deutlich, dass zur Erwärmung der Düse sehr viel mehr Energie benötigt wird als zur Erwärmung der Fluidleitung. Ist der Heizleiter so ausgelegt, dass die Düse eisfrei gehalten werden kann, so ist der Heizleiter für die Fluidleitung viel zu groß dimensioniert. Ist der Heizleiter so ausgelegt, dass er gerade für die Fluidleitung ausreichend ist, so reicht die Heizleistung nicht aus, um auch die Düse eisfrei zu halten.

Zur Lösung dieses Problems wird in der DE 198 15 171 A1 vorgeschlagen, eine drahtförmige Heizeinrichtung im Zuführschlauch und im Düsenkörper zu verlegen, wobei die Heizeinrichtung im Inneren des Düsenkörpers wendelförmig ausgerichtet ist. Durch diese wendelförmige Verlegung der Heizeinrichtung wird eine pro Wegeinheit dichtere Heizdrahtpackung erreicht, so dass Düsenkörper eine höhere Heizleistung zur Verfügung steht, um den Düsenkörper zu erwärmen.

Weil die wendelförmige Heizleitung quasi in Verlängerung der Fluidleitung angeordnet ist, fällt die höhere Heizleistung auch in diesem Bereich an. Die Düse ist aber sehr viel breiter gebaut, weshalb die Wärme einige Zeit benötigt, um sich bis zur Düsenöffnung auszubreiten. In der Praxis werden dann solche Heizleiter sehr viel größer ausgelegt, um eine schnelle Erwärmung auch der Düsenöffnung zu erreichen.

Darüber hinaus hat sich herausgestellt, dass es bei der Montage dieses Heizleiters nur mit erheblichem Aufwand möglich ist, einen einstückigen Heizleiter einzusetzen, der im Bereich der jeweiligen Düse wendelartig ausgebildet ist.

Davon ausgehend liegt der vorliegenden Erfindung die Aufgabe zu Grunde, eine Waschanlage der eingangs genannten Art zu schaffen, die kostengünstig hergestellt werden kann und die mit vermindertem Energieaufwand ein Einfrierschutz gewährleistet.

Als technische Lösung dieser Aufgabe wird erfindungsgemäß eine Waschanlage mit den Merkmalen des Anspruches 1 vorgeschlagen. Vorteilhafte Weiterbildungen dieser Waschanlage sind den Unteransprüchen zu entnehmen.

Eine nach dieser technischen Lehre ausgebildete Waschanlage hat den Vorteil, dass nur ein einziges Heizkabel benötigt wird, um die Fluidleitung und sämtliche Düsen zu beheizen. Hierdurch entstehen mehrere Vorteile:
Durch die mäanderförmige Verlegung des Heizkabels in der Düse verlängert sich das Heizkabel innerhalb der Düse, so dass eine größere Heizleistung zur Verfügung steht, um das Fluid eisfrei zu halten.

Ein weiterer Vorteil besteht darin, dass durch das mäanderförmige Verlegen das Heizkabel flächig in der Düsenkammer verteilt wird, so dass sich die Heizleistung über eine größere Fläche verteilt. Hierdurch wird eine schnellere Erwärmung des Fluids ermöglicht.

In der Erfindung wird das Heizkabel über eine Fluideintrittsöffnung in die Fluidkammer der Düse geleitet, so dass das Heizkabel unmittelbar an das in der Düse befindliche Fluid herangeführt wird, um dieses aufzuwärmen.

Dabei hat es sich als vorteilhaft erwiesen, in der Fluidkammer zwei Haltestege auszubilden, damit das Heizkabel um diese herumgeführt werden kann und somit ein größerer Teil des Heizkabels in der Düse verlegt wird.

Gemäß der Erfindung wird das Heizkabel um eine am Fluideinlass vorstehende Schulter geführt. Auch hierdurch wird die Länge des Heizkabels innerhalb der Düse vergrößert, um eine höhere Heizleistung innerhalb der Düse zu realisieren.

Weitere Vorteile der erfindungsgemäßen Waschanlage ergeben sich aus der beigefügten Zeichnung und den nachstehend beschriebenen Ausführungsformen. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Es zeigen:
Fig. 1 eine explosionsartige Perspektivdarstellung der erfindungsgemäßen Düse mit einem darin verlegten Heizkabel;
Fig. 2 die Düse gemäß Fig. 1 ohne Heizkabel;
Fig. 3 eine explosionsartige Perspektivdarstellung der erfindungsgemäßen Waschanlage mit einem darin verlegten Heizkabel gemäß Fig. 1.

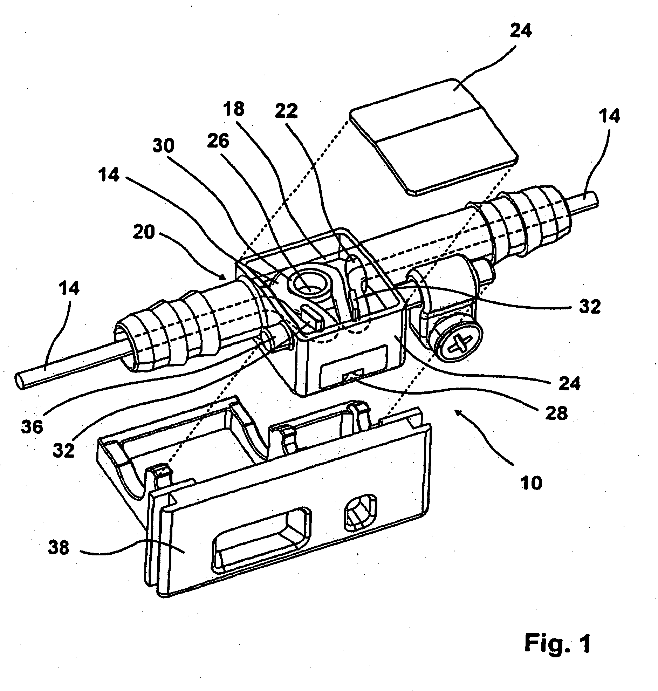

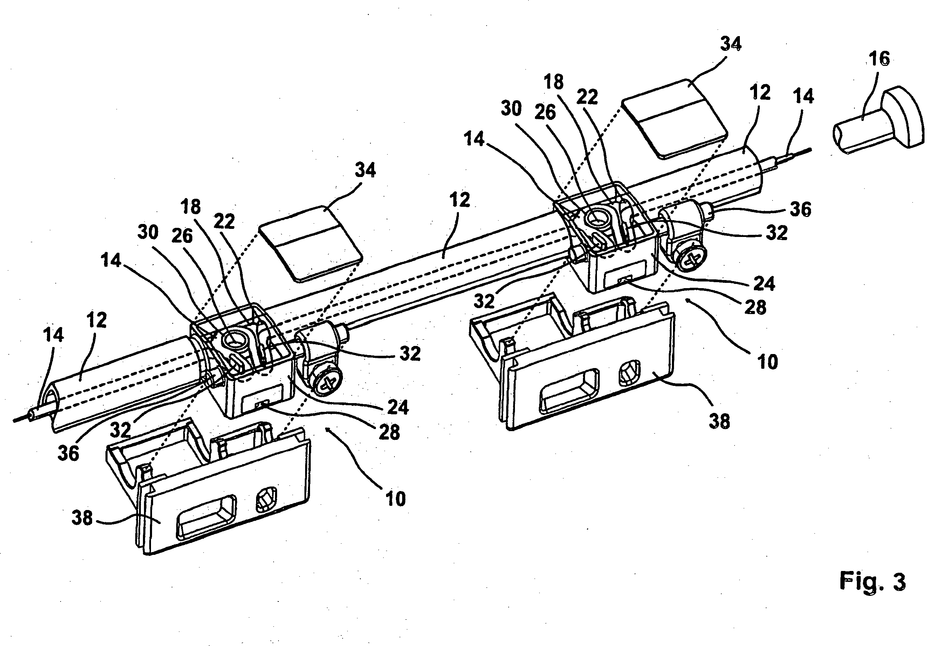

In den Figuren 1 bis 3 ist eine erfindungsgemäße Waschanlage für Scheiben und/oder Scheinwerfer eines Fahrzeuges dargestellt, die zwei Düsen 10 umfasst. In einer anderen, hier nicht dargestellten Ausführungsform kann die Waschanlage auch drei oder auch mehr Düsen aufweisen.

Diese Waschanlage umfasst die Düsen 10, eine Fluidleitung 12 und ein Heizkabel 14. Die Fluidleitung 12 reicht von einem hier nicht näher dargestellten Fluiddepot bis zur ersten Düse 10 und weiter von der ersten Düse 10 bis zur zweiten Düse 10. Auch von der zweiten Düse 10 geht ein Stück der Fluidleitung 12 ab und wird an ihrem Ende mit einem Blindstopfen 16 verschlossen. Innerhalb der Fluidleitung 12 ist das Heizkabel 14 verlegt, welches vorzugsweise als Koaxialkabel ausgelegt ist. Dieses Heizkabel 14 erstreckt sich über die gesamte Fluidleitung und führt auch durch das Innere der Düsen 10. Am Ende der Fluidleitung 12 ist das Heizkabei 14 kurzgeschlossen, d. h. die beiden stromführenden Adern des als Koaxialkabel ausgeführten Heizkabels 14 sind miteinander verbunden, so dass das gesamte Heizkabel 14 mit entsprechendem Strom beaufschlagt werden kann und Wärme an das das Heizkabel 14 umgebende Fluid abgibt.

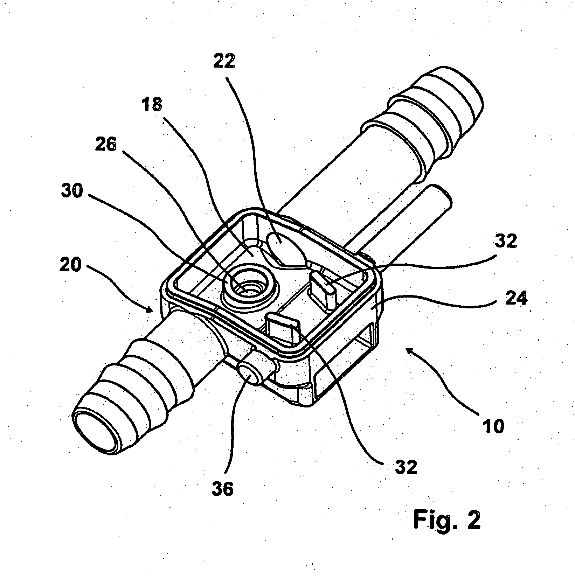

Wie insbesondere den Figuren 1 und 2 zu entnehmen ist, befindet sich im Inneren der Düse 10 eine Fluidkammer 18, die eine Fluideintrittsöffnung 20 und eine Fluidaustrittsöffnung 22 aufweist, durch die das Fluid in die Fluidkammer 18 hinein- und wieder herausgelangen kann. Dabei wird die Fluidkammer 18 von einem Gehäuse 24 begrenzt und besitzt einen Fluideinlass 26, über den das Fluid zu einer Fluidausgabeöffnung 28 gelangt, die das Fluid dann auf die Scheibe oder den Scheinwerfer des Fahrzeuges spritzt. Um den Fluideinlass 26 herum ist eine Schulter 30 ausgebildet, die als Führungselement für das Heizkabel 14 fungiert. Gleichzeitig sind im Inneren der Fluidkammer zwei Haltestege 32 vorgesehen, die ebenfalls als Führungselemente fungieren.

Das in der Fluidleitung 12 verlegte Heizkabel 14 gelangt über die Fluideintrittsöffnung 20 in die Fluidkammer 18 und wird um den ersten Haltesteg 32 herumgelegt. Danach ist das Heizkabel 14 um die Schulter 30 und um den zweiten Haltesteg 32 herumgelegt, bevor es durch die Fluidaustrittsöffnung 22 die Fluidkammer 18 wieder verlässt und in die Fluidleitung 12 gelangt. Die mäanderförmige Verlegung des Heizkabels 14 bewirkt, dass innerhalb der Fluidkammer 18 eine vergleichsweise lange Strecke des Heizkabels 14 zur Aufwärmung des in der Fluidkammer 18 befindlichen Fluids zur Verfügung steht, welche ausreicht, um das in der Fluidkammer 18 befindliche Fluid zu erwärmen und auch um ein etwaiges in der Fluidausgabeöffnung 28 befindliches Fluid frostfrei zu halten.

Die Fluidkammer 18 ist mit einem Deckel 34 verschlossen und über Raststege 36 in einer Düsenhalterung 38 verschwenkbar gehalten. So kann die Fluldausgabeöffnung 28 in die gewünschte Richtung eingestellt werden, um eine optimale Benutzung der Scheibe zu erreichen.

In einer anderen, hier nicht dargestellten Ausführungsform ist in der Fluidleitung bzw. in den Düsen statt des Koaxialkabels ein einadriges Kabel als Heizkabel verlegt. Dieses einadrige Heizkabel ist als Schlinge verlegt, so dass beide Enden des Heizkabels am selben Ende der Fluidleitung mit dem erforderlichen Heizstrom beaufschlagt werden können.

In noch einer anderen Ausführungsform ist das Koaxialkabel oder das einadrige Heizkabel in der Düse schlingenartig verlegt. Je nach Heizbedarf können dabei auch zwei oder mehr Schlingen jeder Düse vorgesehen sein.

### Bezugszeichenliste:

- 10: Düse
- 12: Fluidleitung
- 14: Heizkabel
- 16: Blindstopfen
- 18: Fluidkammer
- 20: Fluideintrittsöffnung
- 22: Fluidaustrittsöffnung
- 24: Gehäuse
- 26: Fluideinlass
- 28: Fluidausgabeöffnung
- 30: Schulter
- 32: Haltestege
- 34: Deckel
- 36: Raststege
- 38: Düsenhalterung

## Patentansprüche

1. Waschanlage für Scheiben und/oder Scheinwerfer eines Fahrzeuges, mit einer Fluidleitung (12), über die ein Fluid von einem Fluiddepot in eine Düse (10) geleitet wird und mit einem Heizkabel (14), welches in der Fluidleitung (12) verlegt ist, wobei das Heizkabel (14) bis in die Düse (10) oder durch die Düse (10) hindurch verlegt ist und neben der Fluidleitung (12) auch die Düse (10) beheizt, wobei das Heizkabel (14) in der Düse (10) mäanderförmig verlegt ist,,
wobei
das im Inneren der Fluidleitung (12) verlegte Heizkabel (14) über eine Fluideintrittsöffnung (20) der Düse (10) in eine Fluidkammer (18) der Düse (10) gelangt und über eine Fluidaustrittsöffnung (22) im Gehäuse (24) der Düse (10) in eine weiterführende Fluidleitung (12) gelangt,
**dadurch gekennzeichnet,**
**dass** ein in der Fluidkammer (18) ausgebildeter Fluideinlass (26) eine vorstehende Schulter (30) aufweist, um die das Heizkabel (14) herumgeführt ist.

2. Waschanlage nach Anspruch 1,
**dadurch gekennzeichnet,**
**dass** in der Fluidkammer (18) zwei Haltestege (32) ausgebildet sind, um die das Heizkabel (14) herumgeführt ist.

3. Waschanlage nach einem der vorangehenden Ansprüche,
**dadurch gekennzeichnet,**
**dass** das Heizkabel (14) in einer Ebene verlegt ist.

4. Waschanlage nach einem der vorangehenden Ansprüche,
**dadurch gekennzeichnet,**
**dass** sich das Heizkabel (14) bis über große Teile der Fluidkammer (18) erstreckt.

## Claims

1. A washing assembly for screens and/or headlamps of a vehicle, with a fluid line (12) through which a fluid is conducted from a fluid reservoir into a nozzle (10) and with a heating cable (14) which is laid in the fluid line (12), said heating cable (14) being laid so as to enter the nozzle (10) or to pass through the nozzle (10) and to heat not only the fluid line (12) but also the nozzle (10), the heating cable (14) being laid in a meander pattern within the nozzle (10), wherein the heating cable (14) laid inside the fluid line (12) enters a fluid chamber (18) of the nozzle (10) passing through a fluid inlet opening (20) of said nozzle (10) and enters another fluid line (12) extending as a continuation through a fluid outlet opening (22) in the housing (24) of said nozzle (10),
**characterized in**
**that** a fluid inlet (26) formed in the fluid chamber (18) comprises a projecting shoulder (30) about which the heating cable (14) is led.

2. The washing assembly as set forth in claim 1,
**characterized in**
**that** two retaining webs (32) about which the heating cable (14) is led are formed in the fluid chamber (18).

3. The washing assembly as set forth in one of the afore mentioned claims,
**characterized in**
**that** the heating cable (14) is laid in one plane.

4. The washing assembly as set forth in one of the afore mentioned claims,
**characterized in**
**that** the heating cable (14) extends over large parts of the fluid chamber (18).

## Revendications

1. Installation de lavage pour vitres et/ou phares d'un véhicule, avec un conduit de fluide (12) dans lequel un fluide est acheminé d'un dépôt de fluide vers un gicleur (10) et avec un câble chauffant (14) posé dans le conduit de fluide (12), le câble chauffant (14) étant posé jusque dans le gicleur (10) ou au travers du gicleur (10) et chauffant non seulement le conduit de fluide (12) mais aussi le gicleur (10), le câble chauffant (14) étant posé dans le gicleur (10) de façon à décrire des méandres, ainsi que le câble chauffant (14) posé à l'intérieur du conduit de fluide (12) traverse un orifice d'admission du fluide (20) du gicleur (10) avant d'entrer dans une chambre de fluide (18) du gicleur (10) et qu'il arrive dans un conduit de fluide (12) qui s'étend dans le prolongement en passant par un orifice de sortie du fluide (22) dans le boîtier (24) du gicleur (10),
**caractérisé en ce**
**qu'**une entrée de fluide (26) formée dans la chambre de fluide (18) comporte un épaulement en saillie (30) autour duquel est enroulé le câble chauffant (14).

2. Installation de lavage selon la revendication 1,
**caractérisé en ce**
**que** deux branches de retenue (32) autour desquelles est enroulé le câble chauffant (14) sont formées dans la chambre de fluide (18).

3. Installation de lavage selon l'une des revendications précédentes,
**caractérisé en ce**
**que** le câble chauffant (14) est posé dans un plan.

4. Installation de lavage selon l'une des revendications précédentes,
**caractérisé en ce**
**que** le câble chauffant (14) s'étend sur de grandes parties de la chambre de fluide (18).
